Europäisches Patentamt

European Patent Office

Office européen des brevets

(11) Publication number: **0 218 767**
**A1**

(12) # EUROPEAN PATENT APPLICATION

(21) Application number: 85308529.8

(22) Date of filing: 25.11.85

(51) Int. Cl.⁴: **B 23 K 9/04**
**B 23 K 9/02, B 23 K 9/12**
**B 23 K 9/16, B 23 K 1/00**
**B 23 K 9/235**

(30) Priority: 21.08.85 GB 8520910

(43) Date of publication of application:
22.04.87 Bulletin 87/17

(84) Designated Contracting States:
AT BE CH DE FR GB IT LI LU NL SE

(71) Applicant: Glasgow Reboring & Resleeving Works
Limited
26/38 Payne Street
Glasgow G4 0LF(GB)

(72) Inventor: Carmichael, Colin Campbell
'Grianan'
Boquhan Balfron Glasgow G63 0RW(GB)

(74) Representative: Pacitti, Pierpaolo Alfonso M.E. et al,
Ian G. Murgitroyd and Company Mitchell House 333 Bath
Street
Glasgow G2 4ER(GB)

(54) **Method of surface treatment of metal components.**

(57) There is described a method and apparatus for restoring
the surface of a metal component to effect rebuilding of a
worn or damaged section of the component. The method
involves pre-treatment of the surface to remove impurities
and thereafter the deposition and fusion of a metal onto the
component by feeding the material to be deposited as a single
wire through welding apparatus. The metal is deposited at an
accurately controlled rate such that the linear displacement of
the metal deposition remains constant during the process.

FIG.1

EP 0 218 767 A1

1

"Method of Surface Treatment of Metal Components"

This invention relates to surface treating of metal components by deposition and fusion of a metal to the surface of the component to be treated.

The invention has application in the restoring of the surface of a metal component to effect rebuilding of a worn or damaged section of the component. The invention also has application in the case of both used and new components. In this case, a metal different from the base material component may be applied to improve the physical properties of the surface or to impart to the surface other desired physical properties, for example, to impart better corrosion resistance or better wear resistance to the component.

Hitherto, surface treatment of this type was effected using metal spraying and flame plating but these methods suffered from the disadvantages in high porosity of the repair and distortion of the component. It is also known to effect surface treatment of this type by continuously fusing a weld of metal around the damaged area or area to be restored but, hitherto, this method has not resulted in a fully acceptable final product.

It is an object of the present invention to obviate or mitigate the above disadvantages.

According to the present invention there is provided a method of surface treatment of metal components by the deposition and fusion of a metal onto the component wherein the method includes the step of feeding the material to be deposited as a single wire through welding apparatus characterised in that the metal is deposited at an accurately controlled rate such that the linear displacement of the metal deposition remains constant during the duration of the process.

The method preferably includes a prior step of pre-treating the surface to remove impurities and a final step of dry machining of the surface at the end of the deposition of each layer.

Preferably also, the component is mounted in a rotating machine such as a lathe, the machine being kept in motion during cooling of the component to room temperature before the final machining stage is effected.

The method of the present invention has particular application in the surface treatment of crank shafts and to this end there is provided a novel design of welding torch, the welding torch having a relatively narrow welding head and extended shank portion in order that the webs of the crank shaft do not interfere with the welding process.

Embodiments of the present invention will now be described, by way of example, with reference to the accompanying drawings, in which:-

Fig. 1 illustrates the method being applied in a number of concentric rings to a shaft;

Fig. 2 illustrates the method being applied in a finely wound spiral;

Fig. 3 illustrates the method being applied to a planar component in a spiral;

Fig. 4 illustrates the method being applied to a planar component in linear welding runs.

Fig. 5 illustrates the method being applied to a crank shaft.

Fig. 6 is a side view of a novel welding torch;

Fig. 7 is an end view of the head of the welding torch of Fig. 6; and

Fig. 8 illustrates the method being applied to an internal surface of a bearing.

Referring to the drawings, the applied wire 1 is fed to a component 10 to be treated through welding apparatus 2 which can be an inert gas shielded arc unit having a specially designed welding gun mounted on a rotary machine such as a lathe which holds the component for rotation about a vertical or horizontal axis.

In each of the figures the arrow A indicates the direction of linear movement of metal deposition and it is the displacement in this direction that is maintained constant in the present invention.

The complete surface treatment process which embodies the method of the present invention comprises the following steps:-

(1) cleaning and finishing the treated area by mechanical and chemical means to expose the base material to a depth such as to accommodate the new material to be deposited;

(2) rotating the component about a vertical or horizontal axis (in a lathe or similar machine) at an accurately controlled rate such that the linear displacement of the metal deposition remains constant during the whole process;

(3) feeding the metal to be deposited as a single wire through an inert gas shield arc welding gun movably mounted on the lathe to permit displacement which is independent of component movement. The single wire forms the consumable electrode for the arc whilst an applied electrical current is passed through the wire and through the component to effect heating and fusion welding of the material of the wire to the component surface and/or of the material previously deposited by a similar process, such to form a homogeneous substantially uniform metal deposit which blends with the base metal of the component;

(4) controlling the displacement of the gun being mounted on the rotary machine such as to lay the deposited material of the wire as it is consumed, either: in concentric rings of fused deposition material, step by step but partially overlapping each other, or, in a finely wound spiral, such as to cover the area to be processed; whilst controlling the feed of wire, the voltage and intensity of the electrical current through the arc and maintaining steady linear progression of the fused deposition along the surface of the component;

(5)   dry machining each separate layer of deposited material prior to the repetition of the process to accumulate a sufficient thickness of deposited material;   and

(6)   maintaining rotary motion of the component, allowing it to cool to room temperature prior performing the final machining to dimensions and surface finish required on the component.

The applied wire can be of any metal compatible with the surface of the component and selected for the properties which are to be imparted to the surface.  The weld is effected by feeding the wire through an inert gas shielding welding gun positioned appropriately in the proximity of the component being treated.  The displacement of the gun is controlled such as to cover ultimately the entire surface to a homogeneous build-up of metal integral with the original component is effected over the area to be trated, and by subsequent machining the surface of the component is restored to dimensions and finish required.

The rate of rotation of the component, wire diameter, type of wire, work speed, current and voltage of the arc, shielding gas or gas mixtures, gas flow, electrode traverse speed, wire feed speed, electrode polarity, voltage regulation and equipment are related to the nature and size of the component and welding gun used.

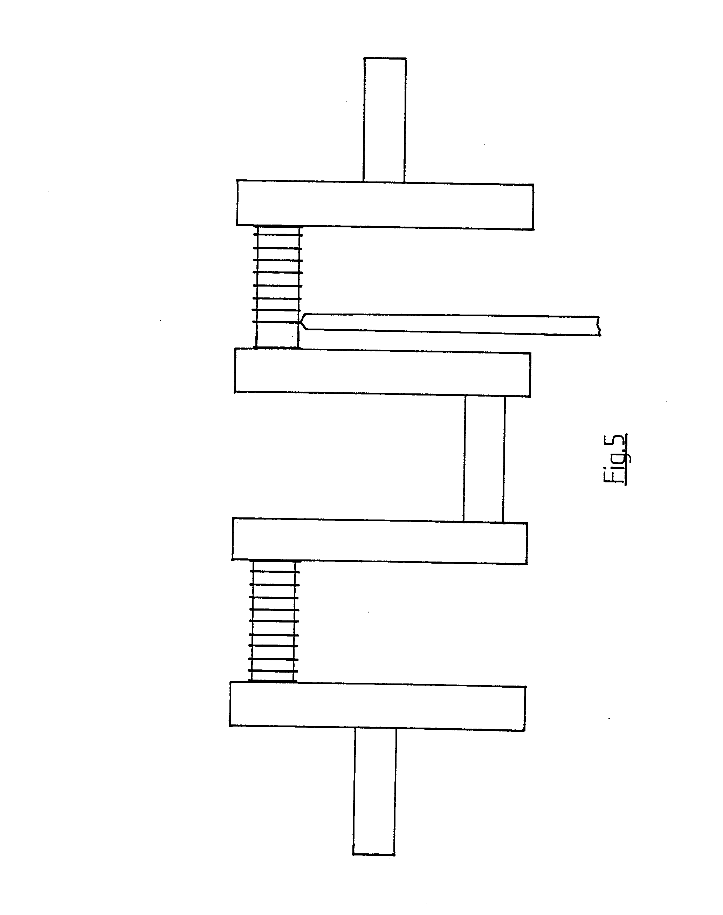

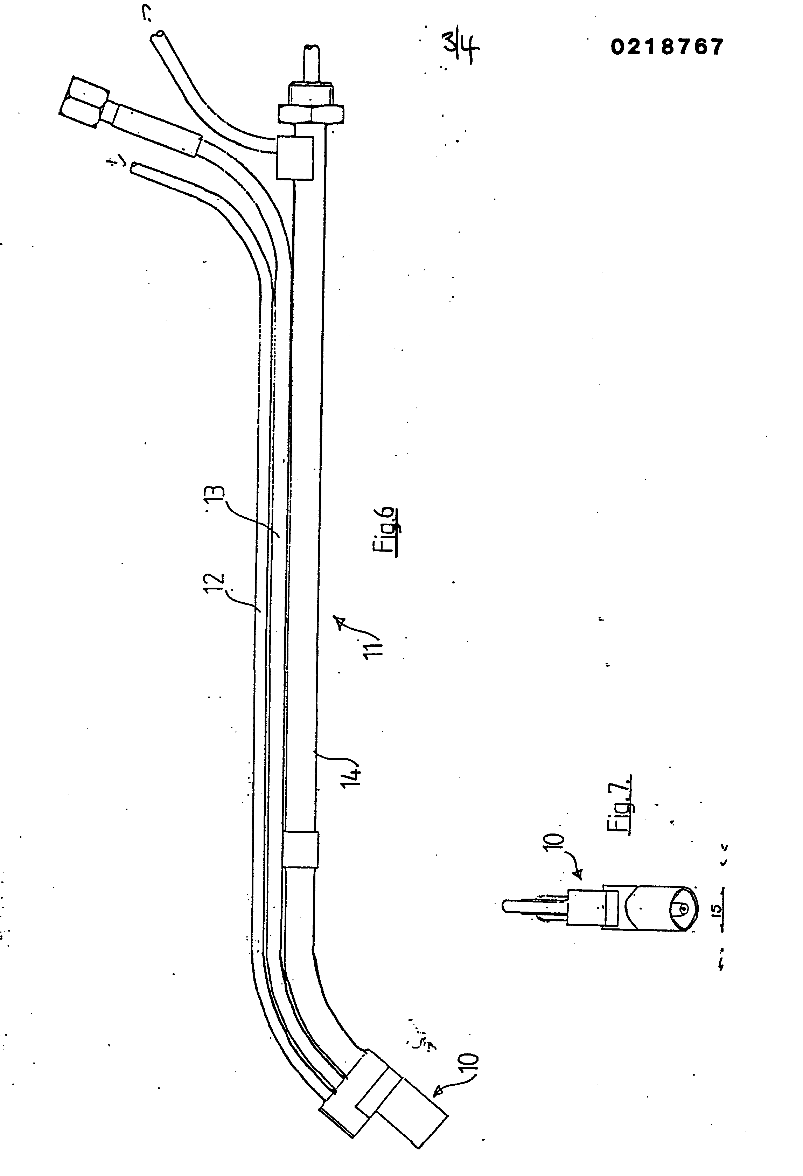

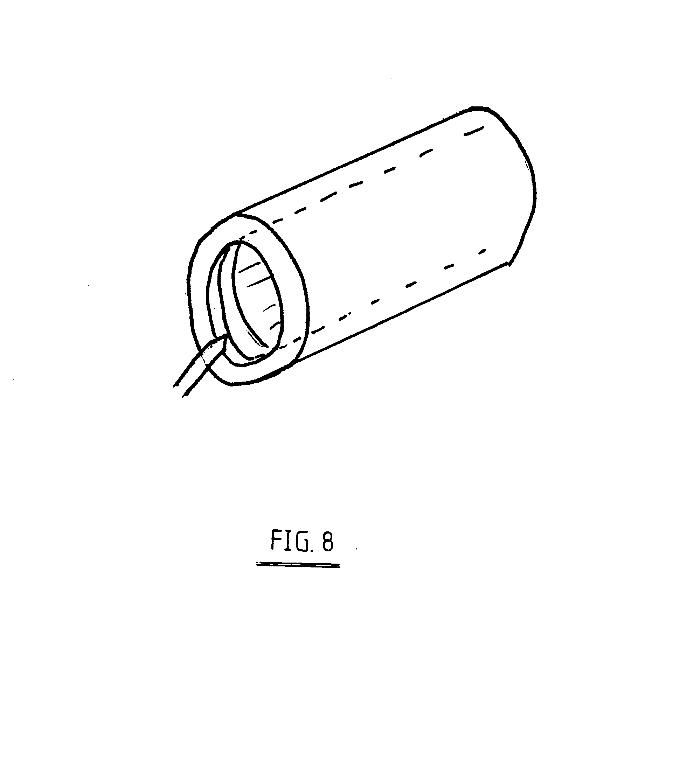

In the specific application of treatment of a crank shaft as illustrated in Fig. 5 a novel design of welding torch can be used.  The torch is better illustrated in Figs. 6 and 7 and comprises a narrow head 10 affixed to the end of an extended shank portion 11.  In order to reduce the thickness of the shank portion the conduits 12 and 13 for cooling are located outside the main supply conduit 14 as opposed to

6

concentrically in known designs.

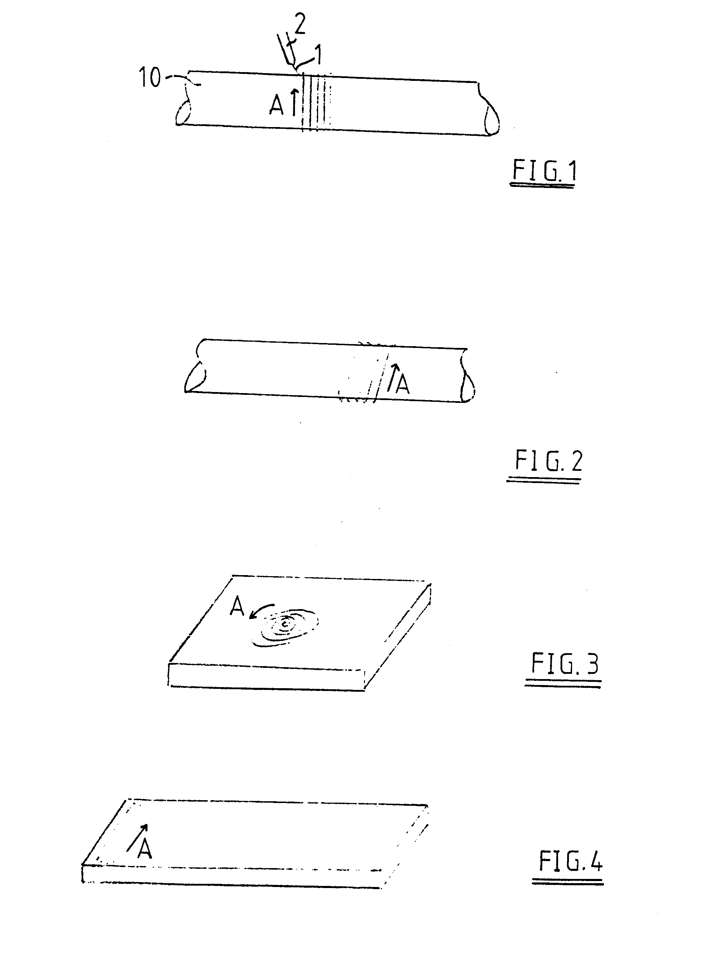

Modifications and improvements may be incorporated without departing from the scope of the invention. For example, the method may be applied to the treatment of the internal surface of a cylindrical bearing as illustrated in Fig. 8. The method may be applied using a number of concentric rings analogous to that shown in Fig. 1 or the metal may be applied in a finely wound spiral analogous to that shown in Fig. 2.

## CLAIMS

1. A method of surface treatment of metal components by the deposition and fusion of a metal onto the component wherein the method includes the step of feeding the material to be deposited as a single wire through welding apparatus characterised in that the metal is deposited at an accurately controlled rate such that the linear displacement of the metal deposition remains constant during the duration of the process.

2. A method as claimed in Claim 1, including the prior step of pre-treating the surface to remove impurities.

3. A method as claimed in Claim 1 and including a final step of dry machining of the surface at the end of the deposition of each layer.

4. A method as claimed in Claim 3, wherein the component to be treated is mounted in a rotating machine which is kept in motion before cooling of the component to room temperature prior to the final machining stage.

5. A welding torch comprising a shank portion through which welding gases are fed to a narrow welding head, conduits for the supply of cooling fluid being located externally of the shank portion in order to reduce the thickness of the welding torch.

0218767

FIG.1

FIG.2

FIG.3

FIG.4

Fig.5

0218767

Fig.6

11

12

13

14

10

Fig.7

10

15

FIG. 8

European Patent Office

**EUROPEAN SEARCH REPORT**

EP 85 30 8529

## - DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 815 925 (REGE MOTORTECHNIK GmbH) * Whole document * | 1-4 | B 23 K 9/04 B 23 K 9/28 |
| X | FR-A-2 300 652 (D.K. HEALEY) * Page 1, line 37 - page 3, line 17; page 3, line 29 - page 4, line 21; page 6, lines 13-20; figure 1 * | 1-3 | |
| X | US-A-4 271 346 (J.C. HARDY) * Column 3, lines 32-49; column 4, lines 57-66; column 9, lines 40-69; column 15, lines 29-34 * | 1-3 | |
| X | US-A-3 826 888 (G. GARFIELD et al.) * Whole document * | 5 | TECHNICAL FIELDS SEARCHED (Int. Cl.4) |
| X | US-A-3 992 603 (R.W. REYNOLDS) * Whole document * | 5 | B 23 K |

-----

| The present search report has been drawn up for all claims | | |
|---|---|---|
| Place of search THE HAGUE | Date of completion of the search 17-11-1986 | Examiner ARAN D.D. |